# EUROPEAN PATENT APPLICATION

(11) **EP 1 705 649 A1**
(43) Date of publication of application: **27.09.2006**
(21) Application number: 06006133.0
(22) Date of filing: 24.03.2006
(51) Int. Cl.: G11B 7/08

(54) **Optical disc apparatus with disc positioning adjustment device**

(30) Priority: 25.03.2005 JP 2005087788
(71) Applicant: Funai Electric Co., Ltd., Daito-shi Osaka 574-0013 (JP)
(72) Inventor: Shirakawa, Tomohiro Funai Electric Co., Ltd., Daito-shi Osaka 574-0013 (JP); Kurita, Takeshi Funai Electric Co., Ltd., Daito-shi Osaka 574-0013 (JP)
(74) Representative: Beetz & Partner

(57) **Abstract**

An optical disc loading apparatus has a traverse chassis (1), an optical disc drive mechanism, a motor mount plate (3), an optical head (4), and a first to a third distance adjuster (51-53) that adjust the distance between the traverse chassis (1) and the motor mount plate (3). The first distance adjuster (51) is located on one of the X and Y axes at a position where the first distance adjuster (51) does not interfere with the turn table (23). The second and third distance adjusters (52, 53) are located symmetrically about the one of the X and Y axes on which the first distance adjuster (51) is located. Thus, with a simple construction and by a simple manner, the angle and the distance between an optical disc and the optical head (4) can be adjusted, and laser light can be shone from the optical head (4) to the optical disc with high accuracy so that data can be read or recorded with accordingly high accuracy.

## Description

### BACKGROUND OF THE INVENTION

### 1. Field of the Invention

The present invention relates to an optical disc loading apparatus that allows adjustment of the distance between an optical disc and an optical head that irradiates the optical disc with laser light and that also permits adjustment of the angle between the optical axis of the laser light emitted from the optical head and the optical disc. The present invention also relates to an optical disc apparatus incorporating such an optical disc loading apparatus.

### 2. Description of Related Art

Today, many appliances use, as a medium for recording video, audio, and other data, optical discs that, by being irradiated with light, allow data to be recorded thereto and read therefrom. Widely used as optical discs are, among others, CDs (compact discs) and DVDs (digital versatile discs). An optical disc apparatus that uses such an optical disc as a recording medium to record data thereto and read data therefrom is provided with an optical head that irradiates a recording surface of the optical disc with laser light and that then detects the light reflected therefrom.

The optical head has an objective lens, with which it condenses laser light and shines it, as a laser spot, on a recording surface of an optical disc to read data therefrom or write data thereto. Here, for accurate reading and recording of data, the laser light needs to be shone properly. Specifically, it is necessary to shine the laser spot on the recording surface of the disc while keeping a proper distance and a proper angle between the recording surface of the optical disc and the optical head.

While the optical disc is rotating, to keep a proper distance and a proper angle between the optical disc and the objective lens, the optical head controls the actuator that holds the objective lens in order to adjust the focus and the tilt. However, the ranges in which the distance and the angle can be varied through the adjustment of the focus and the tilt by the actuator are so small that it is often impossible to obtain a proper distance and a proper angle between the recording surface of the optical disc and the objective lens through the adjustment of the focus and (or) the tilt by the actuator.

For this reason, in the optical disc apparatus, it is common to adjust the inclination and arrangement of the turn table on which the optical disc is placed, or the inclination and arrangement of the optical head, in such a way as to obtain a proper distance and a proper angle between the recording surface of the optical disc and the objective lens of the optical head.

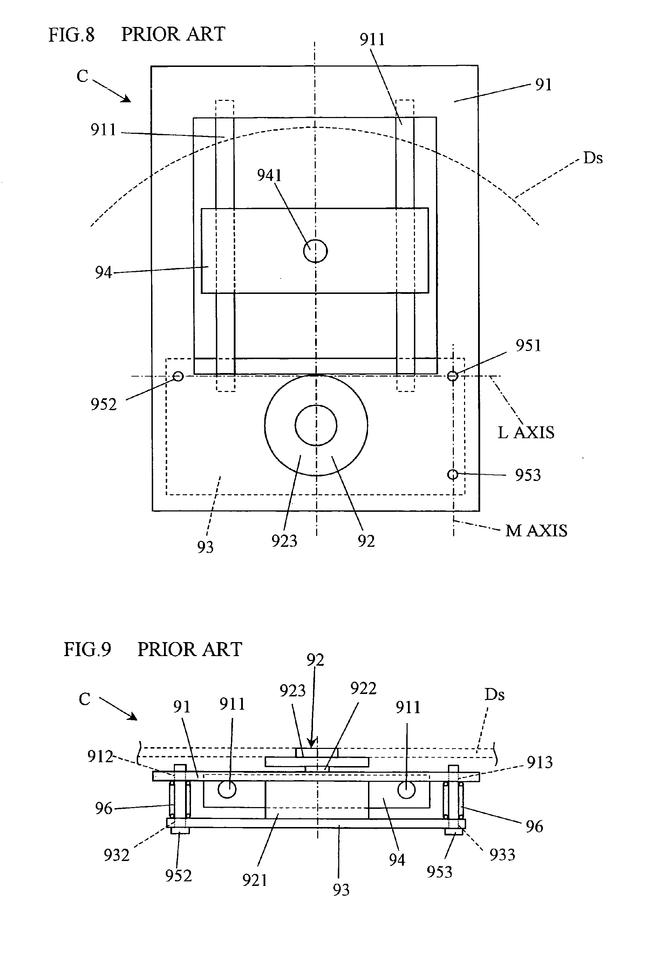

Fig. 8 is a plan view of a conventional optical disc loading apparatus used in an optical disc apparatus. The optical disc apparatus shown in Fig. 8 has: a traverse chassis 91; an optical disc drive mechanism 92 that holds an optical disc Ds and drives it to rotate; a motor mount plate 93 that holds a spindle motor 921, described later, of the optical disc drive mechanism 92; and an optical head 94 that irradiates the optical disc Ds with laser light.

To the traverse chassis 91, two guide rods 911 are fixed. The guide rods 911 are arranged parallel. The optical head 94 engages with the guide rods 911 so as to slide along them. The slide direction is the radial direction of the optical disc Ds. The optical head 94 is provided with an objective lens 941, through which laser light is shone on a recording surface of the optical disc Ds.

The optical disc drive mechanism 92 has: a spindle motor 921; a rotary shaft 922 that is coupled to the spindle motor 921 so as to rotate when the spindle motor 921 is driven; and a turn table 923. When the spindle motor 921 is driven, the rotary shaft 922 rotates, and hence the turn table 923, which is coupled to the rotary shaft 922, rotates together. When the optical disc Ds is placed on the turn table 923, it is then clamped between the turn table 923 and an unillustrated clamp. With the optical disc Ds thus clamped between the turn table 923 and the clamp, the turn table 923 rotates, and this permits the optical disc Ds to rotate at high speed about the rotary shaft 922.

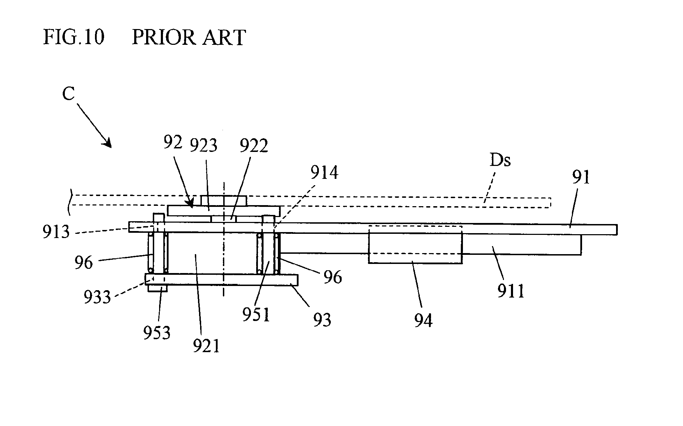

Figs. 9 and 10 are a plan view and a side view, respectively, of the optical disc loading apparatus shown in Fig. 8. The spindle motor 921 is fixed to the motor mount plate 93, and the motor mount plate 93 is arranged on the bottom side of the traverse chassis 91. The motor mount plate 93 is fitted to the traverse chassis 91 with one boss 951 and two screws 952 and 953. Around the boss 951 and the screws 952 and 953, springs 96 are fitted respectively to exert a force that tends to take the traverse chassis 91 and the motor mount plate 93 apart from each other.

As shown in Fig. 9, the screws 952 and 953 penetrate the motor mount plate 93 through screw holes 932 and 933 formed therein, and screw-engage with internally threaded holes 912 and 913 formed in the traverse chassis 91. Likewise, the screws 952 and 953 penetrate the motor mount plate 93 through screw holes 932 and 933 formed therein, and screw-engage with internally threaded holes 912 and 913 formed in the traverse chassis 91. The boss 951 is fitted to the motor mount plate 93 so as to freely move vertically, and engages with a boss hole 914 formed in the traverse chassis 91.

The screw 952 is arranged on an L axis that perpendicularly crosses the slide direction of the optical head 94, and the screw 953 is arranged on an M axis that runs parallel to the slide direction of the optical head 94. The boss 951 is arranged at the intersection between the L and M axes. Based on the arrangement of the optical disc Ds and the optical head 94, their inclination can be considered separately in terms of, roughly divided, the inclination in the direction of a radius of the optical disc Ds (the radial direction, or the "rad" direction) and the inclination in the direction of a tangent to the optical disc Ds (the tangential direction, or the "tan" direction).

To adjust the inclination of the optical disc Ds and of the objective lens 941 of the optical head 94, the inclination of the motor mount plate 93 is adjusted in the "rad" and (or) "tan" directions. By rotating the screw 952, the distance between the traverse chassis 91 and the motor mount plate 93 at the place where the screw 952 is fitted can be adjusted. Thus, the motor mount plate 93 can be tilted about the M axis, which links the other screw 953 and the boss 951. This permits the turn table 923, holding the optical disc Ds, to be tilted in the "tan" direction.

Likewise, by rotating the screw 953, the distance between the traverse chassis 91 and the motor mount plate 93 at the place where the screw 953 is fitted can be adjusted. Thus, the motor mount plate 93 can be tilted about the L axis, which links the other screw 952 and the boss 951. This permits the turn table 923, holding the optical disc Ds, to be tilted in the "rad" direction.

The boss 951 is fitted to the motor mount plate 93 so as to freely move vertically. Thus, by manipulating the boss 951 and the screws 952 and 953, it is possible to adjust the distance between the optical disc Ds and the objective lens 941 of the optical head 94 while keeping their inclination.

In the construction shown in Figs. 9 and 10, where the screws 952 and 953 permit the motor mount plate 93 to be tilted in the "rad" and (or) "tan" directions, the tilt occurs about the L and M axes. The problem here is that, when the motor mount plate 93 is tilted in the "tan" direction, since it is tilted about the M axis, which is located far away from the rotation center of the optical disc Ds, the deviation of the rotation center of the optical disc Ds from the line along which the center of the objective lens 941 slides as the optical head 94 slides increases.

When the rotation center of the optical disc Ds deviates from the center line along which the objective lens 941 slides, the laser light emitted through the objective lens 941 can be shone on the recording surface of the optical disc Ds such that the optical axis is perpendicular to the recording surface, but the position at which the laser light is shone deviates from the proper irradiation position in the radial direction of the optical disc Ds. If, in this state, the motor mount plate 93 is moved vertically to change the distance between the optical head 94 and the optical disc Ds, the irradiation position may further deviate.

If the laser light is shone at a position deviated from the proper position on the optical disc Ds, when the optical head 94 slides along the guide rods 911 to read or write data, the laser spot of the laser light is shone at a position deviated in the radial direction of the optical disc Ds. This makes it impossible to receive light reflected from the proper position, and thus lowers the reading or recording accuracy.

### SUMMARY OF THE INVENTION

In view of the conventionally encountered inconveniences mentioned above, it is an object of the present invention to provide an optical disc loading apparatus that has a simple construction and that permits easy adjustment of the angle and the distance between an optical disc and an optical head, and to provide an optical disc apparatus incorporating such an optical disc loading apparatus.

It is another object of the present invention to provide an optical disc loading apparatus that permits laser light to be shone from an optical head to an optical disc with high accuracy and that thereby permits reading and recording of data with accordingly high accuracy, and to provide an optical disc apparatus incorporating such an optical disc loading apparatus.

To achieve the above object, according to the present invention, an optical disc loading apparatus has: an optical head that irradiates an optical disc with laser light; a disc rotating mechanism that rotates the optical disc; a traverse chassis that slidably supports the optical head; a motor mount plate that is coupled to the traverse chassis and that supports the disc rotating mechanism; and three distance adjusters that adjust the distance between the traverse chassis and the motor mount plate. Moreover, this optical disc loading apparatus is characterized in: that the disc rotating mechanism has a drive motor and a turn table that is fixed to a rotary shaft of the drive motor and on which the optical disc is placed; that the distance adjusters have adjustment screws; internally threaded holes that are formed in the traverse chassis to permit the adjustment screws to screw-engage therewith respectively; screw holes that are formed in the motor mount plate to permit the adjustment screws to penetrate the motor mount plate therethrough respectively; and elastic members that are fitted around the adjustment screws to exert a force that tends to take the traverse chassis and the motor mount plate apart from each other; and that, let an X axis pass through the center of the turn table and run in the same direction as the slide direction of the optical head, and let a Y axis pass through the center of the turn table and run perpendicularly to the X-axis, then of the distance adjusters, the first distance adjuster is located on one of the X and Y axes at a position where the first distance adjuster does not interfere with the turn table, and the second and a third distance adjuster are located symmetrically about the one of the X and Y axes on which the first distance adjuster is located. This construction is referred to as the first construction.

With this construction, by manipulating the first, second, and third distance adjusters, it is possible to tilt the optical disc in the tangential ("tan") and radial ("rad") directions. Here, the tilt can be adjusted about the X and Y axes, and this prevents an increase in the deviation of the rotation center of the optical disc from the line along which the center of the objective lens slides as the optical head slides. Moreover, to tilt the turntable, on which the optical disc is placed, about whichever of the X and Y axes on which the first distance adjuster is located, the first distance adjuster does not need to be manipulated. This makes the tilting process easy to perform.

Alternatively, in the first construction described above, the first distance adjuster is located on the Y axis at a position where the first distance adjuster does not interfere with the turn table, the second and third distance adjusters are located on the side of the X axis opposite to the first distance adjuster, the second and third distance adjusters are located symmetrically about the Y axis, and the first, second, and third distance adjusters are so located that the distances therefrom to the X axis are equal. Here, to tilt the optical disc in the tangential direction, while the second and third distance adjusters are manipulated in one direction, the first distance adjuster is manipulated in the opposite direction and, to tilt the optical disc in the radial direction, the second and third distance adjusters are manipulated in mutually opposite directions. This construction is referred to as the second construction.

With this construction, to tilt the turntable, on which the optical disc is placed, about the Y axis (in the radial direction), the first distance adjuster does not need to be manipulated. This makes the tilting process easy to perform.

Alternatively, in the first construction described above, the first distance adjuster is located on the X axis at a position where the first distance adjuster does not interfere with the turn table, and the second and third distance adjuster are located on the Y axis symmetrically about the X axis. Here, to tilt the optical disc in the tangential direction, the second and third distance adjusters are manipulated in mutually opposite directions and, to tilt the optical disc in the radial direction, the first distance adjuster is manipulated. This construction is referred to as the third construction.

With this construction, to tilt the turntable, on which the optical disc is placed, about the X axis (in the tangential direction), the first distance adjuster does not need to be manipulated and, to tilt the turntable, on which the optical disc is placed, about the Y axis (in the radial direction), the second and third distance adjusters do not need to be manipulated.. This makes the tilting process easy to perform.

By incorporating the optical disc loading apparatus of one of the first to third constructions described above in an optical disc apparatus that irradiates an optical disc with laser light to record data thereto and/or read data therefrom, it is possible to realize an optical disc apparatus that permits easy tilting of the turn table on which an optical disc is placed.

### BRIEF DESCRIPTION OF THE DRAWINGS

These and other objects and features of the present invention will be apparent from the following detailed description of preferred embodiments thereof taken in conjunction with the accompanying drawings, in which:

Fig. 1 is a diagram showing an outline of the construction of an optical disc apparatus according to the present invention;

Fig. 2 is a plan view of a principal part of the optical disc loading apparatus of a first embodiment of the present invention;

Fig. 3 is a front view of a principal part of the optical disc loading apparatus shown in Fig. 2;

Fig. 4 is a side view of a principal part of the optical disc loading apparatus shown in Fig. 2;

Fig. 5 is a plan view of a principal part of the optical disc loading apparatus of a second embodiment of the present invention;

Fig. 6 is a front view of a principal part of the optical disc loading apparatus shown in Fig. 5;

Fig. 7 is a side view of a principal part of the optical disc loading apparatus shown in Fig. 5;

Fig. 8 is a plan view of a conventional optical disc loading apparatus in an optical disc apparatus;

Fig. 9 is a plan view of the optical disc loading apparatus shown in Fig. 8; and

Fig. 10 is a side view of the optical disc loading apparatus shown in Fig. 8.

### DETAILED DESCRIPTION OF PREFERRED EMBODIMENTS

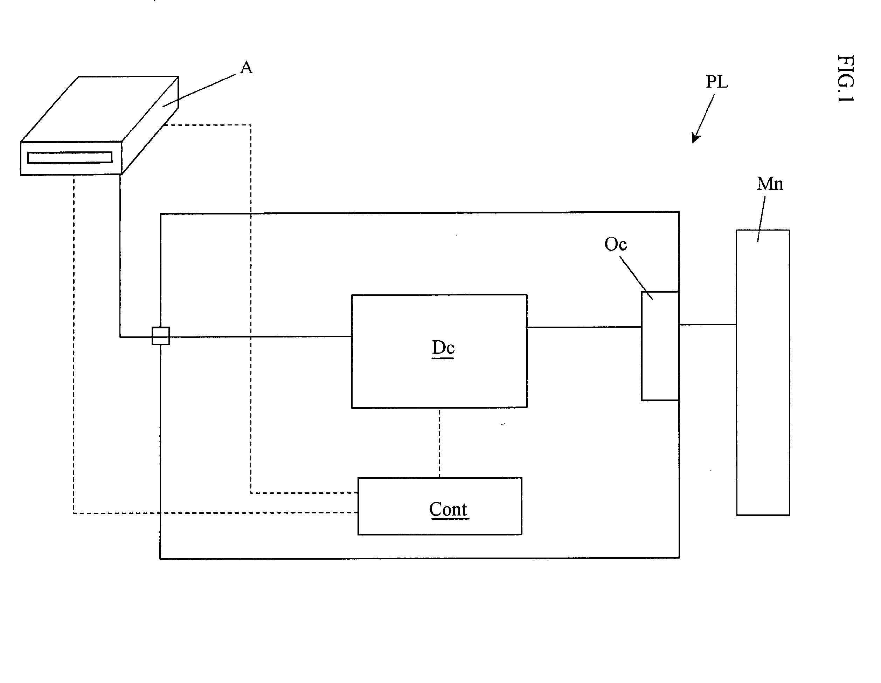

Hereinafter, embodiments of the present invention will be described with reference to the accompanying drawings. Fig. 1 is a diagram showing an outline of the construction of an optical disc apparatus according to the present invention. The optical disc apparatus PL shown in Fig. 1 is provided with: an optical disc loading apparatus A in which an optical disc is loaded; a signal processor Dc that processes signals; an external connection section Oc that connects the signals decoded by the signal processor Dc to an external image display section Mn; and a control section Cont. The optical disc apparatus PL is, for example, but not limited to, a DVD player.

### First Embodiment

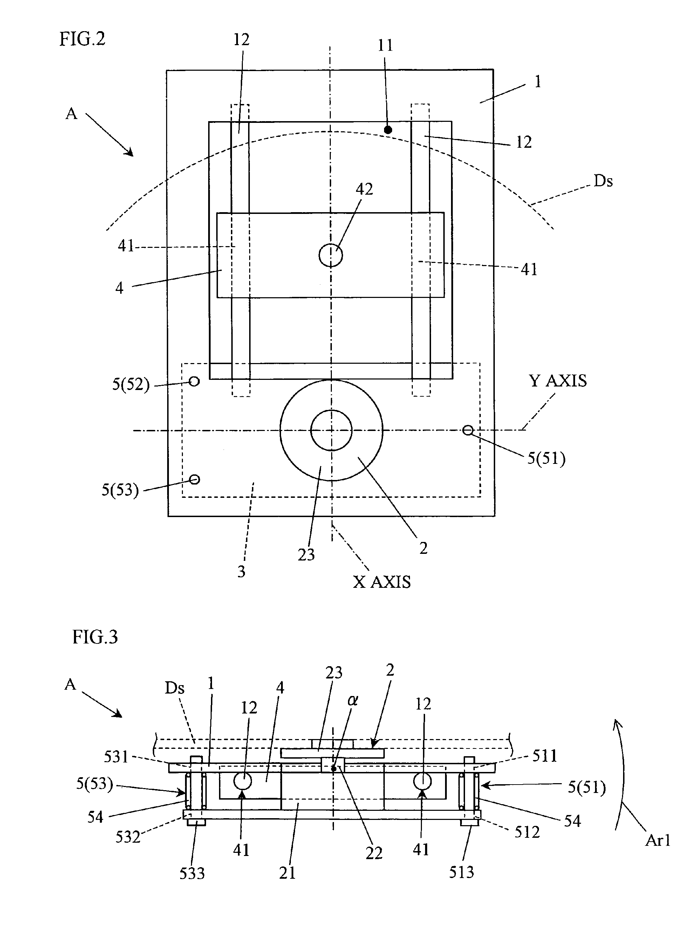

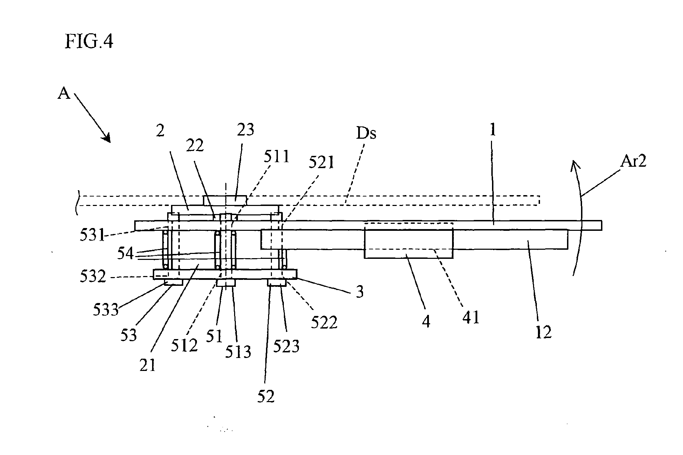

Fig. 2 is a plan view of a principal part of an optical disc loading apparatus embodying the present invention. Figs. 3 and 4 are a plan view and a front view, respectively, of a principal part of the optical disc loading apparatus embodying the present invention shown in Fig. 2. The optical disc loading apparatus A shown in Fig. 2 has: a traverse chassis 1; an optical disc drive mechanism 2 that holds an optical disc Ds and drives it to rotate; a motor mount plate 3 that holds a spindle motor 21, described later, of the optical disc drive mechanism 2; an optical head 4 that irradiates the optical disc Ds with laser light; and distance adjusters 5 that adjust the distance between the traverse chassis 1 and the motor mount plate 3.

The traverse chassis 1 is rectangular as seen in a plan view, and has a through hole 11 formed in a central part thereof. Across below the through hole 11, along the longer sides of the traverse chassis 1, two guide rods 12 are arranged parallel to each other.

The optical disc drive mechanism 2 has: a spindle motor 21; a rotary shaft 22 that is coupled to the spindle motor 21 so as to rotate when the spindle motor 21 is driven; and a turn table 23 that, along with an unillustrated clamp, holds the optical disc Ds by sandwiching it from above and below. The spindle motor 21 is fixed to the motor mount plate 3, and, when the spindle motor 21 is driven, the rotary shaft 22 and the turn table 23, which is fixed to the rotary shaft 22, rotate. At this time, the optical disc Ds is held by the turn table 23, and rotates about the rotary shaft 22.

The optical head 4 has: an engagement portion 41 that slidably engages with the guide rods 12; and an objective lens 42 through which laser light is shone on the optical disc Ds. By using an unillustrated drive mechanism, the optical head 4 moves back and forth along the guide rods 12. As shown in Fig. 2, the objective lens 42 of the optical head 4 moves back and forth along an X axis, which runs from the center of the optical disc Ds (in other words, the rotation center of the spindle motor 21) in the direction of a radius thereof.

As shown in Figs. 2, 3, and 4, the motor mount plate 3 is arranged on the side of the traverse chassis 1 opposite to where the optical disc Ds is placed.

The distance adjusters 5 have three distance adjusters, namely a first distance adjuster 51, a second distance adjuster 52, and a third distance adjuster 53. The first distance adjuster 51 is located on a Y axis, which runs through the rotation center of the optical disc Ds and is perpendicular to the X axis, and at a position close to an edge of the traverse chassis 1 and the motor mount plate 3. The second and third distance adjusters 52 and 53 are located on the side of the X axis opposite to the third distance adjuster 53.

The second and third distance adjusters 52 and 53 are located symmetrically about the Y axis. The distance from the X axis to the first distance adjuster 51 and the distance from the X axis to the second and third distance adjusters 52 and 53 are equal, and the distances from the Y axis to the second and third distance adjusters 52 and 53 are equal.

The first distance adjuster 51 has: a first internally threaded hole 511 formed in the traverse chassis 1; a first screw hole 512 formed in the motor mount plate 3, a first adjustor screw 513 that is put through the first screw hole 512 and screw-engages with the first internally threaded hole 511; and an elastic member (here, a spring 54) that is fitted around the first adjustor screw 513 to exert a force that tends to take the traverse chassis 1 and the motor mount plate 3 apart from each other.

The first internally threaded hole 511 and the first screw hole 512 are formed at positions where they face each other when the motor mount plate 3 is placed in a position where it is coupled to the traverse chassis 1. The motor mount plate 3 is placed on the bottom side of the traverse chassis 1 such that the first internally threaded hole 511 faces the first screw hole 512, and then the first adjustor screw 513 is put through the first screw hole 512 and is then screw-engaged with the first internally threaded hole 511.

Like the first distance adjuster 51, the second distance adjuster 52 has: a second internally threaded hole 521 formed in the traverse chassis 1; a second screw hole 522 formed in the motor mount plate 3, a second adjustor screw 523 that is put through the second screw hole 522 and screw-engages with the second internally threaded hole 521; and an elastic member (here, a spring 54) that is fitted around the second adjustor screw 523 to exert a force that tends to take the traverse chassis 1 and the motor mount plate 3 apart from each other

The second internally threaded hole 521 and the second screw hole 522 are formed at positions where they face each other when the motor mount plate 3 is placed in a position where it is coupled to the traverse chassis 1. The motor mount plate 3 is placed on the bottom side of the traverse chassis 1 such that the second internally threaded hole 521 faces the second screw hole 522, and then the second adjustor screw 523 is put through the second screw hole 522 and is then screw-engaged with the second internally threaded hole 521.

Again Like the first distance adjuster 51, the third distance adjuster 52 has: a third internally threaded hole 531 formed in the traverse chassis 1; a third screw hole 532 formed in the motor mount plate 3, a third adjustor screw 533 that is put through the third screw hole 532 and screw-engages with the third internally threaded hole 531; and an elastic member (here, a spring 54) that is fitted around the third adjustor screw 533 to exert a force that tends to take the traverse chassis 1 and the motor mount plate 3 apart from each other

The third internally threaded hole 531 and the third screw hole 532 are formed at positions where they face each other when the motor mount plate 3 is placed in a position where it is coupled to the traverse chassis 1. The motor mount plate 3 is placed on the bottom side of the traverse chassis 1 such that the third internally threaded hole 531 faces the third screw hole 532, and then the third adjustor screw 533 is put through the third screw hole 532 and is then screw-engaged with the third internally threaded hole 531.

An error such as a fitting error of the guide rods 12 may cause the optical head 4 to be arranged with a tilt relative to the optical disc Ds supported on the turn table 23. When arranged with a tilt, the optical head 4 cannot shine laser light on the optical disc Ds at an accurate angle and an accurate distance, and this lowers the accuracy with which data is written to the optical disc Ds. As a remedy, the motor mount plate 3 is so tilted that the optical axis of the laser light emitted through the objective lens 42 of the tilted optical head 4 is shone, at a constant angle, on the recording surface of the optical disc Ds, and thereby the optical disc Ds placed on the turn table 23 is tilted relative to the optical head 4.

Now, with reference to Fig. 3, how the tilt of the motor mount plate 3 is adjusted will be described. Fig. 3 is a view from in front, and the following discussion deals with a case where the motor mount plate 3 is tilted in the direction indicated by arrow Ar1 shown in Fig. 3. The direction indicated by arrow Ar1 is the direction of a tangent to the optical disc Ds, and will be referred to as the tangential ("tan") direction.

To tilt the motor mount plate 3 such that the left side thereof as seen in Fig. 3 (that is, the side in which the second adjustor screw 523 and the third adjustor screw 533 are fitted) tilts downward, the second and third adjustment screws 523 and 533 are so rotated that the second and third screw holes 522 and 532 move away from the second and third internally threaded holes 521 and 531. At this time, the amounts by which the second and third adjustment screws 523 and 533 are rotated are so adjusted that the distance from the second internally threaded hole 521 to the second screw hole 522 and the distance from the third internally threaded hole 531 to the third screw hole 532 are equal.

Thereafter, the first adjustor screw 513 is rotated in the opposite direction to the direction in which the second and third adjustment screws 523 and 533 have been rotated, so that the first screw hole 512 moves closer to the first internally threaded hole 511. At this time, the first adjustor screw 513 is rotated such that the first screw hole 512 moves by the same amount as the second and third screw holes 522 and 532 have moved.

By rotating the first, second, and third adjustment screws 513, 523, and 533 as described above, it is possible to tilt the motor mount plate 3 about the X axis. Here, the motor mount plate 3 is tilted about "α" shown in Fig. 3, and can thus be rotated about a place close to the center of the optical disc Ds placed on the turn table 23. This helps minimize the deviation of the rotation center of the optical disc Ds, which is placed on the turn table 23 of the optical disc drive mechanism 2, from the X axis, along which the center of the objective lens 42 moves when the optical head 4 slides.

The optical head 4 may be fitted with a tilt in the slide direction. In this case, by the use of the first, second, and third adjustment screws 513, 523, and 533, the motor mount plate 3 is tilted in the direction indicated by arrow Ar2 shown in Fig. 3. The direction indicated by arrow Ar2 is the direction of a radius of the optical disc Ds, and will be referred to as the radial ("rad") direction.

To tilt the optical disc Ds in the "rad" direction, the first adjustor screw 513 is left unoperated, and the second and third adjustment screws 523 and 533 are manipulated. For example, to give a tilt such that, as one goes from the center to the edge of the optical disc Ds across the part thereof facing the optical head 4, the optical disc Ds is increasingly far from the optical head 4, the second adjustor screw 523 is so rotated that the second screw hole 522 moves in such a way as to decrease the distance between the traverse chassis 1 and the motor mount plate 3. The third adjustor screw 533 is rotated in the direction opposite to the direction in which the second adjustor screw 523 has been rotated, so that the third screw hole 532 moves in such a way as to increase the distance between the traverse chassis 1 and the motor mount plate 3. At this time, the amounts by which the second and third adjustment screws 523 and 533 are rotated are so adjusted that the third screw hole 532 moves by the same amount as the second screw hole 522 has moved.

By manipulating the second and third adjustment screws 523 and 533 as described above, it is possible to tilt the motor mount plate 3, and thereby to tilt the recording surface of the optical disc Ds. Thereafter, the first, second, and third adjustment screws 513, 523, and 533 are manipulated such that the first, second, and third screw holes 512, 522, and 532 of the first, second, and third distance adjusters 51, 52, and 53 move by the same amounts. This permits the laser spot of the laser light to be so adjusted as to properly strike the recording surface of the optical disc Ds.

By giving a tilt in the "tan" and "rad" directions and adjusting the height as described above, it is possible to make the optical axis of the laser light emitted through the objective lens 42 of the optical head 4 have a proper angle relative to the recording surface of the optical disc Ds, and to adjust the focus position. This helps increase the accuracy with which data is read from and written to the optical disc.

In this embodiment, the first, second, and third distance adjusters 51, 52, and 53 may alternatively achieve distance adjustment in the following manner. The first, second, and third internally threaded holes 511, 521, and 531 formed in the traverse chassis 1 are replaced with through holes, and the parts of the first, second, and third adjustment screws 513, 523, and 533 that protrude from the traverse chassis 1 are screw-engaged with nuts. In this case, it is preferable that the nuts be unrotatably fixed to the traverse chassis 1.

The distance from the first distance adjuster 51 to the X axis and the distance from the second and third distance adjusters 52 and 53 to the X axis do not necessarily have to be equal. In that case, by making proper amounts of adjustment according to the distances, it is possible to tilt the motor mount plate 3 in a manner similar to that in which it is tilted in this embodiment. The distances from the second and third distance adjusters 52 and 53 to the Y axis do not necessarily have to be equal. In that case also, by making proper amounts of adjustment according to the distances from the Y axis, it is possible to tilt the motor mount plate 3 in a manner similar to that in which it is tilted in this embodiment.

The second and third distance adjusters may be located on the X axis. In that case, the motor mount plate 3 can be tilted in the "tan" direction by manipulating the first distance adjuster 51 alone.

### Second Embodiment

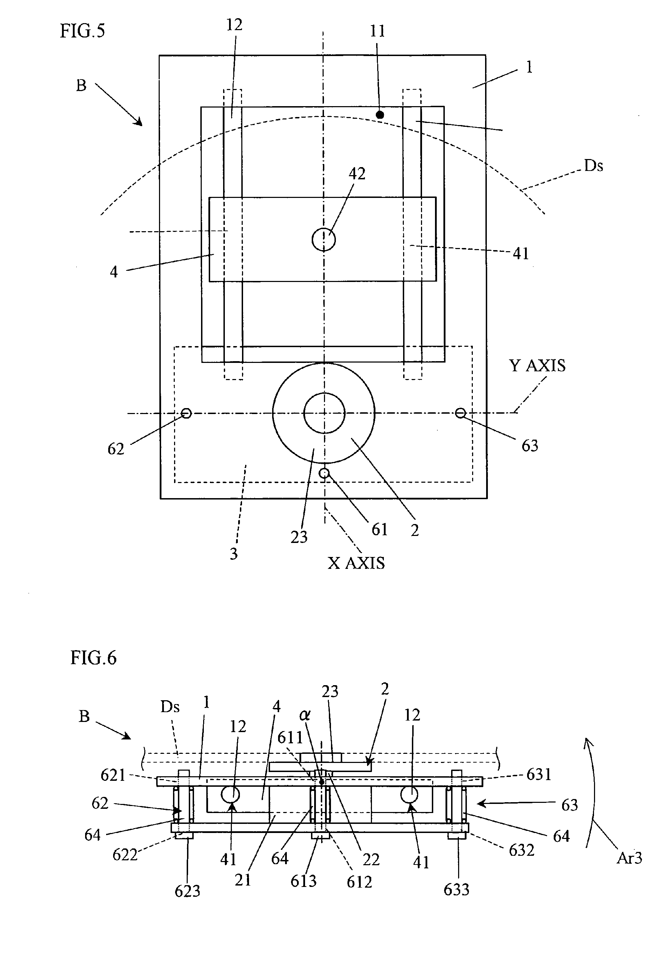

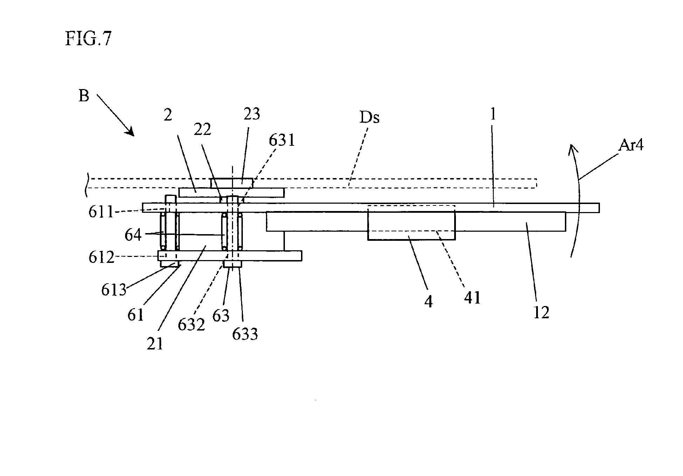

Fig. 5 is a plan view of a principal part of another optical disc loading apparatus embodying the present invention. Figs. 6 and 7 are a plan view and a front view, respectively, of a principal part of the optical disc loading apparatus embodying the present invention shown in Fig. 5. The optical disc loading apparatus B of the second embodiment differs from the optical disc loading apparatus A of the first embodiment only in the locations of the first, second, and third distance adjusters 61, 62, and 63, and therefore, in the following description, such parts as serve substantially the same functions between the two embodiments are identified with common reference numerals and symbols.

As shown in Figs. 5, 6, and 7, the motor mount plate 3 is arranged on the side of the traverse chassis 1 opposite to where the optical disc Ds is placed. The motor mount plate 3 is coupled to the traverse chassis 1 by a first, a second, and a third distance adjuster 61, 62, and 63.

The first distance adjuster 61 is located on an X axis, which runs from the center of the optical disc Ds (in other words, the rotation center of the spindle motor 21) in the direction of a radius thereof, and on the side of the spindle motor 21 opposite to the optical head 4.

The second and third distance adjusters 62 and 63 are located on a Y axis, which passes through the rotation center of the spindle motor 21 and is perpendicular to the X axis, and symmetrically about the X axis. In this embodiment, as shown in Fig. 6, the first distance adjuster 62 is located in the left side as seen from in front, though any other arrangement is possible. The distances from the X axis to the second and third distance adjusters 62 and 63 are equal.

The first distance adjuster 61 has: a first internally threaded hole 611 formed in the traverse chassis 1; a first screw hole 612 formed in the motor mount plate 3, a first adjustor screw 613 that is put through the first screw hole 612 and screw-engages with the first internally threaded hole 611; and an elastic member (here, a spring 64) that is fitted around the first adjustor screw 613 to exert a force that tends to take the traverse chassis 1 and the motor mount plate 3 apart from each other.

The first internally threaded hole 611 and the first screw hole 612 are formed at positions where they face each other when the motor mount plate 3 is placed in a position where it is coupled to the traverse chassis 1. The motor mount plate 3 is placed on the bottom side of the traverse chassis 1 such that the first internally threaded hole 611 faces the first screw hole 612, and then the first adjustor screw 613 is put through the first screw hole 612 and is then screw-engaged with the first internally threaded hole 611.

Like the first distance adjuster 61, the second distance adjuster 62 has: a second internally threaded hole 621 formed in the traverse chassis 1; a second screw hole 622 formed in the motor mount plate 3, a second adjustor screw 623 that is put through the second screw hole 622 and screw-engages with the second internally threaded hole 621; and an elastic member (here, a spring 64) that is fitted around the second adjustor screw 623 to exert a force that tends to take the traverse chassis 1 and the motor mount plate 3 apart from each other.

The second internally threaded hole 621 and the second screw hole 622 are formed at positions where they face each other when the motor mount plate 3 is placed in a position where it is coupled to the traverse chassis 1. The motor mount plate 3 is placed on the bottom side of the traverse chassis 1 such that the second internally threaded hole 621 faces the second screw hole 622, and then the second adjustor screw 623 is put through the second screw hole 622 and is then screw-engaged with the second internally threaded hole 621.

Again like the first distance adjuster 61, the third distance adjuster 63 has: a third internally threaded hole 631 formed in the traverse chassis 1; a third screw hole 632 formed in the motor mount plate 3, a third adjustor screw 633 that is put through the third screw hole 632 and screw-engages with the third internally threaded hole 631; and an elastic member (here, a spring 64) that is fitted around the third adjustor screw 633 to exert a force that tends to take the traverse chassis 1 and the motor mount plate 3 apart from each other.

The third internally threaded hole 631 and the third screw hole 632 are formed at positions where they face each other when the motor mount plate 3 is placed in a position where it is coupled to the traverse chassis 1. The motor mount plate 3 is placed on the bottom side of the traverse chassis 1 such that the third internally threaded hole 631 faces the third screw hole 632, and then the third adjustor screw 633 is put through the third screw hole 632 and is then screw-engaged with the third internally threaded hole 631.

Now, with reference to Fig. 6, how the tilt of the motor mount plate 3 is adjusted will be described. Fig. 6 is a view from in front, and the following discussion deals with a case where the motor mount plate 3 is tilted in the direction indicated by arrow Ar3 shown in Fig. 6. The direction indicated by arrow Ar3 is the direction of a tangent to the optical disc Ds, and will be referred to as the tangential ("tan") direction.

To tilt the motor mount plate 3 such that the left side thereof as seen in Fig. 6 (that is, the side in which the first distance adjuster 62 is fitted) tilts downward, the second adjustor screw 623 is so rotated that the second screw hole 622 moves in such a way as to increase the distance between the second internally threaded hole 621 and the second screw hole 622. The third adjustor screw 633 is rotated in the direction opposite to the direction in which the second adjustor screw 623 has been rotated, so that the third screw hole 632 moves in such a way as to decrease the distance between the third internally threaded hole 631 and the third screw hole 632. At this time, the amounts by which the second and third adjustment screws 623 and 633 are rotated are so adjusted as to be equal.

By rotating the second and third adjustment screws 623 and 633 as described above, it is possible to tilt the motor mount plate 3 about the X axis. Here, the motor mount plate 3 is tilted about "α" shown in Fig. 6. The rotation center "α" about which the motor mount plate 3 is tilted is located close to the center of the optical disc Ds placed on the turn table 23. This helps minimize the deviation of the rotation center of the optical disc Ds, which is placed on the turn table 23, from the X axis, along which the center of the objective lens 42 moves when the optical head 4 slides.

The optical head 4 may be fitted with a tilt in the slide direction. In this case, by the use of the first distance adjuster 61, the motor mount plate 3 is tilted in the direction indicated by arrow Ar4 shown in Fig. 7. The direction indicated by arrow Ar4 is the direction of a radius of the optical disc Ds, and will be referred to as the radial ("rad") direction.

To tilt the optical disc Ds in the "rad" direction, only the first distance adjuster 61 is manipulated. For example, to give a tilt such that, as one goes from the center to the edge of the optical disc Ds across the part thereof facing the optical head 4, the optical disc Ds is increasingly far from the optical head 4, the first adjustor screw 613 is so rotated that the first screw hole 612 moves in such a way as to decrease the distance between the first internally threaded hole 611 and the first screw hole 612. At this time, the second and third adjustment screws 623 and 633 do not move. Thus, the motor mount plate 3 rotates (tilts) about the line linking the second and third adjustment screws 62 and 63, that is, about the Y axis.

By manipulating the first distance adjuster 61 as described above, it is possible to tilt the motor mount plate 3 and thereby tilt the recording surface of the optical disc Ds. Thereafter, the first, second, and third adjustment screws 613, 623, and 633 are manipulated such that the first, second, and third screw holes 612, 622, and 632 move by the same amounts, so that the laser spot of the laser light is so adjusted as to properly strike the recording surface of the optical disc Ds.

By giving a tilt in the "tan" and "rad" directions and adjusting the height as described above, it is possible to make the optical axis of the laser light emitted through the objective lens 42 of the optical head 4 have a proper angle relative to the recording surface of the optical disc Ds, and to adjust the focus position. This helps increase the accuracy with which data is read from and written to the optical disc.

In this embodiment, the first, second, and third distance adjusters 61, 62, and 63 may alternatively achieve distance adjustment in the following manner. The first, second, and third internally threaded holes 611, 621, and 631 formed in the traverse chassis 1 are replaced with through holes, and the parts of the first, second, and third adjustment screws 613, 623, and 633 that protrude from the traverse chassis 1 are screw-engaged with nuts. In this case, it is preferable that the nuts be unrotatably fixed to the traverse chassis 1.

The distances from the second and third distance adjusters 62 and 63 to the X axis do not necessarily have to be equal. In that case, by making proper amounts of adjustment according to the distances, it is possible to tilt the motor mount plate 3 in a manner similar to that in which it is tilted in this embodiment.

The second and third distance adjusters 62 and 63 may be located on the side of the Y axis opposite to the first distance adjuster 61.

According to the present invention described above by way of embodiments, it is possible to realize an optical disc loading apparatus that has a simple construction and that permits easy adjustment of the angle and the distance between an optical disc and an optical head, and to realize an optical disc apparatus incorporating such an optical disc loading apparatus.

Moreover, according to the present invention, it is possible to realize an optical disc loading apparatus that permits laser light to be shone from an optical head to an optical disc with high accuracy and that thereby permits reading and recording of data with accordingly high accuracy, and to realize an optical disc apparatus incorporating such an optical disc loading apparatus.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An optical disc loading apparatus including:
an optical head (4) that irradiates an optical disc with laser light;
a disc rotating mechanism (2) that rotates the optical disc;
a traverse chassis (1) that slidably supports the optical head (4);
a motor mount plate (3) that is coupled to the traverse chassis (1) and that supports the disc rotating mechanism (2); and
three distance adjusters (5) that adjust a distance between the traverse chassis (1) and the motor mount plate (3),
**characterized in**
**that** the disc rotating mechanism (2) includes:
a drive motor; and
a turn table (23) that is fixed to a rotary shaft (22) of the drive motor (21) and on which the optical disc is placed
**that** the distance adjusters (5) include:
adjustment screws;
internally threaded holes (511) that are formed in the traverse chassis to permit the adjustment screws (513) to screw-engage therewith respectively;
screw holes (512) that are formed in the motor mount plate (3) to permit the adjustment screws to penetrate the motor mount plate therethrough respectively; and
elastic members (54) that are fitted around the adjustment screws (513) to exert a force that tends to take the traverse chassis (1) and the motor mount plate (3) apart from each other, and
**that**, let an X axis pass through a center of the turn table (23) and run in a same direction as a slide direction of the optical head (4), and let a Y axis pass through the center of the turn table (23) and run perpendicularly to the X-axis, then
of the distance adjusters (5), a first distance adjuster (51) is located on one of the X and Y axes at a position where the first distance adjuster (51) does not interfere with the turn table (23), and a second and a third distance adjuster (52, 53) are located symmetrically about the one of the X and Y axes on which the first distance adjuster (51) is located.

2. The optical disc loading apparatus of claim 1, wherein
the first distance adjuster (51) is located on the Y axis at a position where the first distance adjuster (51) does not interfere with the turn table (23),
the second and third distance adjusters (52, 53) are located on a side of the X axis opposite to the first distance adjuster (51),
the second and third distance adjusters (52, 53) are located symmetrically about the Y axis,
the first, second, and third distance adjusters (51-53) are so located that distances therefrom to the X axis are equal, and
to tilt the optical disc in a tangential direction, while the second and third distance adjusters (52, 53) are manipulated in one direction, the first distance adjuster (51) is manipulated in an opposite direction and, to tilt the optical disc in a radial direction, the second and third distance adjusters (52, 53) are manipulated in mutually opposite directions.

3. The optical disc loading apparatus of claim 1 or 2, wherein
the first distance adjuster (51) is located on the X axis at a position where the first distance adjuster (51) does not interfere with the turn table (23), and
the second and third distance adjuster (52, 53) are located on the Y axis symmetrically about the X axis, and
to tilt the optical disc in a tangential direction, the second and third distance adjusters (52, 53) are manipulated in mutually opposite directions and, to tilt the optical disc in a radial direction, the first distance adjuster (51) is manipulated.

4. An optical disc apparatus that irradiates an optical disc with laser light to record data thereto and/or read data therefrom, **characterized in**
**that** the optical disc apparatus includes the optical disc loading apparatus of any of claims 1 to 3.
